# EUROPEAN PATENT APPLICATION

(11) **EP 3 745 326 A1**
(43) Date of publication of application: **02.12.2020**
(21) Application number: 19176766.4
(22) Date of filing: 27.05.2019
(51) Int. Cl.: G06N 20/20, G06N 5/00, G06N 7/00, G06N 3/04

(54) **METHOD FOR DETERMINING A PLURALITY OF TRAINED MACHINE LEARNING MODELS**

(71) Applicant: Siemens Aktiengesellschaft, 80333 München (DE)
(72) Inventor: Geipel, Markus Michael, 80799 München (DE); Kaiser, Markus, 80539 München (DE)

(57) **Abstract**

The invention relates to a computer-implemented method for determining a plurality of trained machine learning models, comprising the steps of receiving at least one labeled training data set; wherein the at least one labeled training data set comprises a plurality of input-output pairs, each pair comprising an input vector with a plurality of data values and at least one associated label as output value; receiving at least one machine learning data set with a supervised machine learning problem and/or further related data; determining a plurality of loss functions for at least one initial loss function using at least one strategy; wherein the loss functions of the plurality of loss functions are variants of the at least one initial loss function; and determining a trained machine learning model for each loss function of the plurality of loss functions by training a machine learning model on the basis of the at least one labeled training data set and the at least one machine learning data set. Further, the invention relates to a corresponding computer program product and system.

## Description

### 1. Technical field

The present invention relates to a computer-implemented method for determining a plurality of trained machine learning models. Further, the invention relates to a corresponding computer program product and system.

### 2. Prior art

Loss functions are known from the prior art in context of optimization algorithms, including supervised machine learning. The term loss function can be equally referred to as objective function, cost function, error function or error metrics. The objective function is used to evaluate a candidate solution i.e. a set of weights. The objective function is maximized or minimized during the optimization process, according to which a candidate solution with the highest or lowest score is searched. Considering neural networks, the error is minimized.

Designing a loss function is complex task which requires the knowledge and experience of machine-learning experts to this day. The loss function can be used to assign different weights to different types of error. In an anomaly detection use case, a false positive may be less damaging than a false negative. Thereby, the false positive stands for a reported anomaly where there is none. The false negative stands for an unreported anomaly where there is in fact one. Thus, the machine-learning expert assigns a higher loss to the latter. This preference for false positives or false negatives is used for the machine learning algorithm. The machine learning algorithm minimizes the loss function during training or fitting depending on the defined preference.

However, machine learning more and more moves into the field of domain experts. Contrary to machine-learning experts, the domain experts often don't know the concept of a loss function, e.g. a maintenance engineer. Additionally, the domain experts also often lack experience in designing the loss function. Translating the preference for avoiding false negatives into a concrete loss function while also avoiding subtle negative interactions with the used machine learning algorithm is a challenging task. The disadvantage is that the domain expert is not well enough educated in the field of machine learning. Thus, he is not capable of designing the loss function or designing the loss function in a reliable manner.

Therefore, currently, this task is completed by a teamwork of domain experts and machine-learning experts or alternatively by further education of the domain experts. The disadvantage is that this current solution is insufficient since it is time-consuming and expensive.

It is therefore an objective of the invention to provide a method for determining a plurality of trained machine learning models in an efficient and reliable manner without the machine learning expert's knowledge, parameters or other machine learning data to specify the loss function.

### 3. Summary of the invention

This problem is according to one aspect of the invention solved by a computer-implemented method for determining a plurality of trained machine learning models, comprising the steps of:
a. Receiving at least one labeled training data set; wherein
b. the at least one labeled training data set comprises a plurality of input-output pairs, each pair of the plurality of input-output pairs comprising an input vector with a plurality of data values and at least one associated label as output value;
c. Receiving at least one machine learning data set with a supervised machine learning problem and/or further related data;
d. Determining a plurality of loss functions for at least one initial loss function using at least one strategy; wherein
e. the loss functions of the plurality of loss functions are variants of at least one initial loss function; and
f. Determining a trained machine learning model for each loss function of the plurality of loss functions by training a machine learning model on the basis of at least one labeled training data set and at least one machine learning data set.

Accordingly, the invention is directed to a method for determining a plurality of trained machine learning models.

In the first steps a. to c., the input data sets are provided or received for training in step f., namely the labeled training data set and the supervised machine learning problem. The labeled training data set comprises a set of training examples. In supervised learning, each training example is a pair. The pair comprises an input object, in particular a vector or matrix, and a desired output value or label (also called the supervisory signal). For example, the training labeled data set comprises images of machine parts as data values with associated labels. Exemplary labels for the machine parts are defect and no defect.

The further related data can comprise importance scores e.g. per input-output pair, or description of the output values used in the result presentation to the domain expert. Supervised learning problems can be further grouped into regression and classification. Exemplary supervised machine learning algorithms are linear regression for regression problems, random forest for classification and regression problems and support vector machines for classification problems. In particular, a neural network can be used as supervised machine learning algorithm in this invention. Referring to the example, a convolutional neural network is used for image classification.

The input data sets can be received via one or more interfaces and/or can be stored in a storage unit for data storage and data transmission from the storage unit.

In a further step, variations or variants of an initial loss function are generated using a strategy. Thereby, distinct strategies can be appropriate, such as e.g. grid search or any other hyperparameter optimization algorithm. For example, new or additional loss functions are generated on the basis of the initial loss function, which have a higher weight on false positives. This results e.g. the loss functions: Loss function 1 = #false positives + #false negatives, Loss function 2 = 2* #false positives + #false negatives and Loss function 3 = #false positives + 2*#false negatives.

In a further step, the machine learning model is trained with the different variants of the initial loss function. Thus, the plurality of loss functions, the machine learning problem and the labeled training data set serve as input for training the machine learning model in step f. In other words, the training is repeated for each loss function or variant of the initial loss function, for example neural network training. According to which, N loss functions result in N models. Referring to the example, N trained neural networks are determined.

The advantage is that no explicitly defined loss function or any other data is required as input for the method according to the invention and thus training. Contrary to prior art, the input or knowledge of the machine learning expert is no longer needed. The domain expert can perform the method and determine the loss function without understanding the concept of loss functions, being able to define and refine them. This allows for a clear separation of responsibilities between the domain expert and the machine learning expert.

Any feedback of the domain expert to the training results can be used in context of the applied strategy and feedback loop, but is optional or not required. For example, the domain expert is asked to apply his knowledge to recognize good or bad training results. Additionally or alternatively to the feedback, further analysis can be added, such as profitability or cost-effectiveness analysis.

This opens machine learning platforms such as MindSphere, Predictive learning or Edge AI Workbench to a wider user group.

Moreover, the method according to the invention ensures an improved efficiency and accuracy in determining the loss function.

In one aspect, the at least one strategy is selected from the group, comprising hyperparameter optimization, a feedback of a user and/or a heuristic, wherein the heuristic is in particular based on the feedback of the user. Accordingly, distinct strategies can be used. Initially, as starting point, variants of a default loss function can be determined as plurality of loss functions using any algorithm of hyperparameter optimization. Alternatively or additionally, the feedback of a user can be considered, especially after one feedback loop or evaluation of the output data of the method according to the invention by the user. The user is in particular a domain expert. Thus, the method can be applied in a flexible manner according to the specific application case, underlying technical system and user requirements.

In another aspect, the hyperparameter optimization is an algorithm, selected from the group comprising: grid search, random search and Bayesian optimization.

In another aspect, the method further comprises at least one action selected from the group, comprising
- Determining further statistical output data for the plurality of trained machine learning models, in particular the labels, the scores assigned to the labels and/or further statistics;
- outputting the determined plurality of trained machine learning models and/or the further statistical output data to a user for further evaluation;
- displaying the determined plurality of trained machine learning models and/or the further statistical output data to a user for further evaluation; and
- transmitting the determined plurality of trained machine learning models and/or the further statistical output data to a computing unit for further evaluation.

In another aspect, the evaluation comprises at least one action selected from the group, comprising
- rating the determined plurality of trained machine learning models depending the further statistical output data and/or user knowledge; and
- selecting at least one trained machine learning model of the plurality of machine learning models depending the further statistical output data and/or user knowledge.

Accordingly, the output data, data of intermediate method steps and/or any other related statistical information can be further handled. One or more actions can be performed. The action can be equally referred to as measure or further method step. The actions can be triggered depending on the user knowledge, evaluation by the user or any other criteria. The actions can be performed by one or more computing units of the system. The actions can be performed sequentially or simultaneously. Actions include e.g. storing and processing steps. The advantage is that appropriate actions can be performed in a timely manner.

First, e.g. the output data can be outputted and displayed to the domain expert, for example by means of a display unit. Referring to the example, the statistics over false negatives and false positives is provided to the domain expert.

Further, the domain expert can evaluate the trained machine learning models and/or statistics. For example, the domain expert can rank or rate the machine learning models and select one or more machine learning models. Referring to the example, the domain expert wants or prefers less false positives. Additionally or alternatively, the domain expert can select the machine learning models depending on their assigned scores or confirm them according to any other criteria, such as performed ranking.

Further, the feedback to the machine learning models, answers to questions asked to the domain expert or any other information of the domain expert can be collected, stored or used as strategy for the determination of the variants after one feedback loop. This way, the strategy in step d. can be optimized resulting in an improved determination of variants and training.

In another aspect, the method further comprising collecting feedback of the user, wherein the feedback is a feedback to the plurality of machine learning models, the further statistical output data, the evaluation and/or an answer to a question. Accordingly, any feedback given by the user, especially domain expert can be stored, processed or used as strategy in step d. The questions can be asked by the computing unit or system.

A further aspect of the invention is a computer program product directly loadable into an internal memory of a computer, comprising software code portions for performing the steps according to any one of the preceding claims when said computer program product is running on a computer.

A further aspect of the invention is a system for determining a plurality of trained machine learning models, comprising the steps of:
a. Receiving unit for receiving at least one labeled training data set; wherein
b. the at least one labeled training data set comprises a plurality of input-output pairs, each pair of the plurality of input-output pairs comprising an input vector with a plurality of data values and at least one associated label as output value;
c. Receiving unit for receiving at least one machine learning data set with a supervised machine learning problem and/or further related data;
d. Determining unit for determining a plurality of loss functions for at least one initial loss function using at least one strategy; wherein
e. the loss functions of the plurality of loss functions are variants of the at least one initial loss function; and
f. Determining unit for determining a trained machine learning model for each loss function of the plurality of loss functions by training a machine learning model on the basis of the at least one labeled training data set and the at least one machine learning data set.

The units may be realized as any devices, or any means, for computing, in particular for executing a software, an app, or an algorithm. For example, the determining unit may comprise a central processing unit (CPU) and a memory operatively connected to the CPU. The determining unit may also comprise an array of CPUs, an array of graphical processing units (GPUs), at least one application-specific integrated circuit (ASIC), at least one field-programmable gate array, or any combination of the foregoing. The units may comprise at least one module which in turn may comprise software and/or hardware. Some, or even all, modules of the units may be implemented by a cloud computing platform.

### 4. Short description of the drawings

In the following detailed description, presently preferred embodiments of the invention are further described with reference to the following figures:

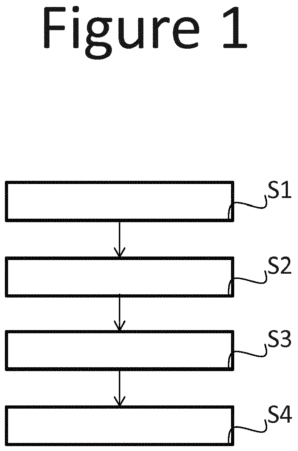

- Fig. 1: illustrates a flowchart of the method according to the invention.

### 5. Detailed description of preferred embodiments

Fig. 1 illustrates a flowchart of the method according to the invention with the method steps S1 to S4. The method steps S1 to S4 will be explained in the following in more detail.

In the first steps S1 and S2, the input data sets are provided.

### Determining the loss functions as variants for the initial loss function using a strategy S3

The variants can be generated by a number of different strategies. Exemplary strategies applied in metalearning or design of experiment are grid search, random search and Bayesian optimization. Further strategies include the domain expert's feedback and additional heuristics. The heuristics can be static or based on past data from other domain experts.

For example, any algorithm of the above hyperparameter optimization algorithms can be combined with an additional search heuristic informed by more detailed domain expert feedback, such an answer to a question.

Exemplary question: Should false alarms be avoided at the expense of taking a higher risk of missed incidents?

Exemplary answer: Yes.

Implied heuristic: Bias search towards loss functions with higher loss for false positives or lower costs for false negatives.

### Determining the trained machine learning models for the variants of the initial loss function S4

The loss functions as variants are essential for training in step S4. The training is repeated for each loss function of the plurality of loss functions N, resulting in the same number of trained machine learning models N.

### Further actions

Moreover, after training, further actions or method steps can be performed.

For example, the training results, including the predictions, classifications and/or respective summary statistics can be provided or presented to the domain expert, e.g. by a display unit. This way, the domain expert can make reasoning about a good or bad training result. Thus, the training results are provided in the problem domain of the subject matter expert and not in the solution domain of the statistician or machine learning expert.

Problem domain results include:
1. Representative examples for false positives and false negatives
2. What-if scenarios showing the implications of a particular model for operation: For instance
   Model A would have resulted in 10 alarms in the current month, 4 of them being false alarms. 1 incident would have been missed by the model, resulting in X Euros of extra cost.
3. For the statistically more inclined domain expert the classical machine learning metrics could be shown additionally.

For example, feedback from the domain expert can be collected. The domain expert can be asked to compare the training results of the different trained machine learning models and perform one or more further actions. Exemplary actions include:
1. Rating the trained machine learning models from bad to good.
2. Selecting the best ones.
   The best, good or bad ones can be identified on the basis of the experts opinion, the experts knowledge, the experts evaluation, the statistical information including scores or any other criteria.
3. Giving feedback to particular predictions, such as individual misclassifications.
4. The system could provide more direct feedback. The feedback can be formulated in the language of the problem space, see further above.

This way, the domain expert is not asked to rate or change any model parameters, but he can give feedback on the results. Thus, little knowledge about the underlying machine learning system is needed or necessary to make such a judgement or evaluation.

## Claims

1. Computer-implemented method for determining a plurality of trained machine learning models, comprising the steps of:
a. Receiving at least one labeled training data set (S1); wherein
b. the at least one labeled training data set comprises a plurality of input-output pairs, each pair of the plurality of input-output pairs comprising an input vector with a plurality of data values and at least one associated label as output value;
c. Receiving at least one machine learning data set with a supervised machine learning problem and/or further related data(S2);
d. Determining a plurality of loss functions for at least one initial loss function using at least one strategy (S3); wherein
e. the loss functions of the plurality of loss functions are variants of the at least one initial loss function; and
f. Determining a trained machine learning model for each loss function of the plurality of loss functions by training a machine learning model on the basis of the at least one labeled training data set and the at least one machine learning data set (S4) .

2. Method according to claim 1, wherein the at least one strategy is selected from the group, comprising hyperparameter optimization, a feedback of a user and/or a heuristic, wherein the heuristic is in particular based on the feedback of the user.

3. Method according to claim 1 or claim 2, wherein the hyperparameter optimization is an algorithm, selected from the group comprising: grid search, random search and Bayesian optimization.

4. Method according to any of the preceding claims, wherein the method further comprises at least one action selected from the group, comprising
- Determining further statistical output data for the plurality of trained machine learning models, in particular the labels, the scores assigned to the labels and/or further statistics;
- outputting the determined plurality of trained machine learning models and/or the further statistical output data to a user for further evaluation;
- displaying the determined plurality of trained machine learning models and/or the further statistical output data to a user for further evaluation; and
- transmitting the determined plurality of trained machine learning models and/or the further statistical output data to a computing unit for further evaluation.

5. Method according to claim 4, wherein the evaluation comprises at least one action selected from the group, comprising
- rating the determined plurality of trained machine learning models depending the further statistical output data and/or user knowledge; and
- selecting at least one trained machine learning model of the plurality of machine learning models depending the further statistical output data and/or user knowledge.

6. Method according to claim 5, further comprising collecting feedback of the user, wherein the feedback is a feedback to the plurality of machine learning models, the further statistical output data, the evaluation and/or an answer to a question.

7. A computer program product directly loadable into an internal memory of a computer, comprising software code portions for performing the steps according to any one of the preceding claims when said computer program product is running on a computer.

8. System for determining a plurality of trained machine learning models, comprising:
a. Receiving unit for receiving at least one labeled training data set; wherein
b. the at least one labeled training data set comprises a plurality of input-output pairs, each pair of the plurality of input-output pairs comprising an input vector with a plurality of data values and at least one associated label as output value;
c. Receiving unit for receiving at least one machine learning data set with a supervised machine learning problem and/or further related data(S2);
d. Determining unit for determining a plurality of loss functions for at least one initial loss function using at least one strategy; wherein
e. the loss functions of the plurality of loss functions are variants of the at least one initial loss function; and
f. Determining unit for determining a trained machine learning model for each loss function of the plurality of loss functions by training a machine learning model on the basis of the at least one labeled training data set and the at least one machine learning data set.
